Europäisches Patentamt

European Patent Office

Office européen des brevets

(19)

(11) Publication number: **0 025 280**
**B1**

(12)

# EUROPEAN PATENT SPECIFICATION

(45) Date of publication of patent specification: **04.07.84**

(51) Int. Cl.³: **F 16 K 31/02**

(21) Application number: **80302767.1**

(22) Date of filing: **12.08.80**

(54) Electrostatically actuated valve.

(30) Priority: **10.09.79 IE 1711/79**
**20.03.80 GB 8009499**

(43) Date of publication of application:
**18.03.81 Bulletin 81/11**

(45) Publication of the grant of the patent:
**04.07.84 Bulletin 84/27**

(84) Designated Contracting States:
**BE CH DE FR GB IT LI NL SE**

(56) References cited:
**FR - A - 2 294 535**
**GB - A - 825 548**
**US - A - 3 405 728**
**US - A - 3 416 541**
**US - A - 3 587 613**

(73) Proprietor: **IMPERIAL CHEMICAL INDUSTRIES PLC**
**Imperial Chemical House Millbank**
**London SW1P 3JF (GB)**

(72) Inventor: **Coffee, Ronald Alan**
**Thursley Copse Farnham Lane**
**Haslemere Surrey (GB)**

(74) Representative: **Roberts, Timothy Wace et al,**
**Imperial Chemical Industries PLC Legal**
**Department : Patents PO Box 6**
**Welwyn Garden City Herts, AL7 1HD (GB)**

Courier Press, Leamington Spa, England.

## Description

The present invention relates to valves.

Numerous mechanical means are known for stopping or limiting the flow of liquid through a pipe or orifice. A typical example is the domestic tap. With increasing automation and control of systems and devices by electronic computers, it is convenient to have valves which are readily operated electrically. Taps or stopcocks can be, and frequently are, operated by electrical relays or servomechanisms, but these are generally awkward and cumbersome, relatively expensive, and in particular do not readily lend themselves to cheap and convenient miniaturisation when relatively small flows of liquid are involved. Valves employing electrostatic forces are disclosed in FR—A—2294535 but these are of specialised construction. The valve disclosed in GB—A—825548 depends on the Johnson-Rahbeck effect; at least one valve member is of semiconductor material and both valve surfaces must be polished optically flat and come into direct contact without intervening insulation. One valve member is spring supported.

We have now devised a valve which is electrically operable, simple in design and readily miniaturised.

The invention comprises a valve as claimed in claim 1.

The plug may be mechanically biased by spring-biasing, or by other mechanical means, e.g. gravity or liquid pressure.

Electrostatic repulsion is used since electrostatic forces vary inversely as the square of the distance between charged objects, and inertia is easier to overcome, and the valve less prone to stick, if the force is initially at a maximum and decreases as the plug moves, as will be the case with repulsion, rather than vice versa, as with attraction.

A specific embodiment of the invention will now be described with reference to the drawings, in which:

Figure 1 is a vertical section through a valve according to the invention.

Figure 2 is a plan view of plate 54 shown in Figure 1.

In the described embodiment, a valve according to the invention is provided in the neck of a container containing an organic liquid pesticide formulation, for use in electrostatic spraying.

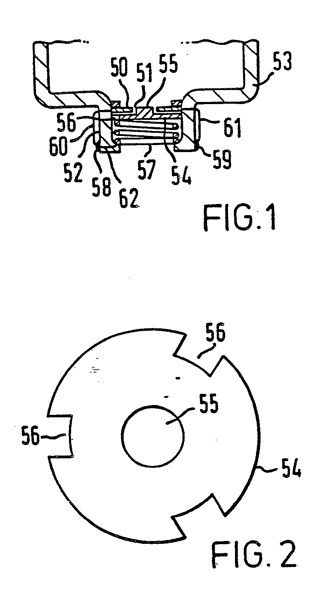

The valve comprises a metal plate (50) with a central port (51) mounted in the neck (52) of the container (53). Below the plate (50) is a second metal plate (54), shown in plan in Figure 2. It has a central boss (55) which fits within the port (51) of plate (50) and acts as a plug, closing it against passage of liquid. Plate (54) has peripheral slots (56), and is urged against plate (50) by a compression spring (57). Metal plates (50) and (54) are coated, on their lower and upper surfaces respectively, with a thin layer of a dielectric (epoxide resin). Contacts (58) and (59) on the outside of the neck (52) are electrically connected via the metal plate (50) and conductors (60) and (61). Contact (58) is also connected to plate (54) via conductor (62) and spring (57). In operation, the container (53) is mounted on a spraying apparatus (not shown) in fluid-tight engagement with a conduit leading to an electrostatic spray-head. Contacts (58) and (59) are thereby connected respectively to the output terminal of a high voltage generator and to the conducting surface of the electrostatic spray-head. A potential of about 20 kilovolts is thus applied to plates (50) and (54). This potential forces the plates apart by electrostatic repulsion against the action of the spring (57), and liquid flows from the container (53) through the port (51) and slots (56) into the apparatus for delivery to the spray-head. At the same time the spray-head receives a potential appropriate to atomise the liquid being delivered to it. Without the container on the apparatus, the electrostatic valve cannot open, and neither can potential be transmitted to the electrostatic spray-head.

The foregoing description of the specific embodiment in a specific application illustrates one advantage of the invention. The container of potentially toxic pesticide is effectively tamper-proof when not in use, because of the need for application of a high potential to open the valve. Electrostatic valves according to our invention are particularly useful in containers of the type described, and may also be conveniently used in other electrostatic spraying applications, e.g. in spraylines, since in such applications a source of high voltage is necessarily readily available.

Valves of the type illustrated are most useful in controlling the flow of gases and relatively non-polar liquids. Polar liquids (particularly water) may be found to upset their functioning. For applications where this is inconvenient, it is possible to design valves in which the liquid does not come into contact with these parts of the plug (or port) which are electrostatically charged.

The valve illustrated in Figures 1 and 2 may be adapted to become progressive, if the boss (55) is replaced by a conical projection fitting into a conical recess. If then the applied voltage is varied, the force between plates (50) and (54) will vary correspondingly, as will the compression of the spring (57) and hence the space for liquid to flow between the conical projection and recess. In this way, liquid flow can be progressively controlled according to the applied voltage. Devices of this type may have diverse applications, for example in electrostatic spraying, and in fuel carburation in motor vehicles. An alternative way of obtaining a progressive action is by using a butterfly valve, of the type commonly used in motor vehicles to control gas flow. A cylindrical tube is closed by a circular disc of diameter slightly less than the internal diameter of the tube. The disc is mounted transversely, so as to pivot about a diameter of the disc (which is also a diameter of the tube). The disc is rotationally spring-biased against stops in the walls of the tube. Charging both stops and disc to a high potential causes the disc to rotate back against the spring, to a degree depending on the potential, and permits fluid to pass through the valve.

## Claims

1. A valve comprising a port (51) for the passage of fluid, a plug (55) for interrupting the flow of fluid through the port, mechanically biased into a position closing the port and seating therein and means for creating an electrostatic field characterised in that the plug is electrically insulated from the port seating (50) and that the means for creating the electrostatic field is adapted to charge the plug and the port seating in use to a high potential of like sign whereby the plug moves relative to the seating so as to open the valve against the mechanical bias.

2. A valve as claimed in claim 1, in which the plug and port are so shaped that progressive movement therebetween, brought about by progressively increasing the electrostatic field, progressively increases the flow of fluid therethrough.

3. A valve as claimed in claim 2, comprising a first metal plate having said port therein, a second adjacent metal plate having a boss comprising said plug and being spring-biased to plug the port.

## Revendications

1. Valve comprenant un orifice (51) destiné au passage d'un fluide, un obturateur (55) destiné à interrompre l'écoulement du fluide à travers l'orifice, rappelé mécaniquement vers une position dans laquelle il ferme l'orifice et s'y loge, et des moyens destinés à produire un champ électrostatique, caractérisée en ce que l'obturateur est isolé électriquement du siège (50) de l'orifice et en ce que les moyens destinés à produire le champ électrostatique sont conçus pour charger l'obturateur et le siège de l'orifice, pendant l'utilisation, à un potentiel élevé de même signe, afin que l'obturateur se déplace par rapport au siège pour ouvrir la valve contre le rappel mécanique.

2. Valve selon la revendication 1, dans laquelle l'obturateur et l'orifice sont configurés de manière qu'un mouvement progressif de l'un par rapport à l'autre produit par un accroissement progressif du champ électrostatique, augmente progressivement l'écoulement du fluide à travers la valve.

3. Valve selon la revendication 2, comprenant une première plaque métallique présentant ledit orifice, une seconde plaque métallique adjacente comportant un bossage constituant ledit obturateur et rappelée par ressort pour obturer l'orifice.

## Patentansprüche

1. Ventil mit einer Öffnung (51) für den Durchgang eines Fluids, mit einem Stopfen (55) zum Unterbrechen des Flusses des Fluids durch die Öffnung, der mechanisch in eine die Öffnung verschließende Stellung gedrückt wird und in dieser sitzt, und mit einer Einrichtung zur Erzeugung eines elektrostatischen Felds, dadurch gekennzeichnet, daß der Stopfen vom Sitz (50) der Öffnung elektrisch isoliert ist und daß die Einrichtung zur Erzeugung des elektrostatischen Fels so ausgebildet ist, daß sie den Stopfen und den Sitz der Öffnung beim Betrieb auf ein hohes Potential mit gleichem Vorzeichen aufladen kann, so daß sich der Stopfen in bezug auf den Sitz in der Weise bewegt, daß das Ventil gegen den mechanischen Druck geöffnet wird.

2. Ventil nach Anspruch 1, bei welchem der Stopfen und die Öffnung so geformt sind, daß durch eine allmähliche Bewegung der beiden relativ zueinander, die durch eine allmähliche Verstärkung des elektrostatischen Felds zustande gebracht wird, die Strömung des Fluids durch die Öffnung allmählich verstärkt wird.

3. Ventil nach Anspruch 2, welches eine erste Metallplatte, in der die Öffnung ausgebildet ist, und eine zweite benachbarte Metallplatte, die einen den Stopfen bildenden Vorsprung aufweist und zum Verschließen der Öffnung federbelastet ist, besitzt.

FIG.1

FIG. 2